# EUROPEAN PATENT SPECIFICATION

(11) **EP 3 320 042 B1**
(45) Date of publication and mention of the grant of the patent: **12.02.2020**
(21) Application number: 16740985.3
(22) Date of filing: 08.07.2016
(51) Int. Cl.: C08L 33/12, C08L 27/06, C08K 3/00

(54) **POLYMER COMPOSITION, ITS METHOD OF PREPARATION AND USE**
POLYMERZUSAMMENSETZUNG, VERFAHREN ZUR HERSTELLUNG UND VERWENDUNG
COMPOSITION POLYMÈRE, SON PROCÉDÉ DE PRÉPARATION ET SON UTILISATION

(30) Priority: 09.07.2015 FR 1556528
(43) Date of publication of application: 16.05.2018
(73) Proprietor: ARKEMA FRANCE, 92705 Colombes Cedex (FR)
(72) Inventor: PIRRI, Rosangela, 64121 Montardon (FR); HAJJI, Philippe, 69380 Chatillon d'Azergues (FR); VERMOGEN, Alexandre, 69510 Soucieu en Jarrest (FR); WILHELM, Alain, 69530 Orlienas (FR)
(74) Representative: Senff, Holger
(86) International application number: PCT/EP2016/066346
(87) International publication number: WO 2017/005922

(56) References cited:
- EP-A1- 0 143 321
- WO-A1-2010/099160
- US-A- 4 329 276
- US-A- 4 564 653
- US-A- 4 584 349

## Description

### [Field of the invention]

The present invention according to claims 1 to 21 relates to a polymeric processing aid its composition and its process of preparation and its use.

In particular the present invention it relates to a polymeric processing aid and its use for highly filled halogen containing thermoplastic polymers.

More particularly the present invention relates to a highly filled halogen containing polymer composition with a polymeric processing aid, its composition and its process of preparation.

### [Technical problem]

Fillers are used in thermoplastic polymer compositions in general and in halogenated polymer compositions in particularly for a variety of reasons. They can extend the composition, increase stiffness and strength, and shorten cycle times. They prevent hang-up in dies and neutralize the products of degradation. Fillers cans also be used to add color, opacity and conductivity or they can be used as a low cost material that lowers the cost of the composition as the filler is less expensive the other ingredients of the formulation.

However the addition of filler can change the fusion characteristics of the polymer composition. Proper fusion is necessary to obtain good physical properties.

Polymer compositions comprising polymers with specific characteristic (such as polymer composition, glass transition temperature or specific molecular weight range for naming some characteristics) are used as additives for thermoplastic polymer compositions in general and in halogenated polymer compositions in particularly in order to enhance the processing behavior of these various polymers or plastic resin or to improve their performance. Therefor these additives are also called processing aids.

The additive polymer composition is compatible with thermoplastic polymer compositions in general and in halogen containing polymer compositions in particularly.

Processing aids in small quantities in thermoplastic polymer compositions in general and in halogenated polymer compositions in particularly can improve the processing characteristics through an acceleration of the fusion process of said thermoplastic polymer compositions in general and homogenization in halogen containing polymer compositions in particularly.

With a filler added in large quantities to the composition, the processing aid used for the non-filled composition does not possess the same performance as in a highly filled composition, especially in view of fusion efficiency of the composition.

The objective of the present invention is to propose a polymer composition which acts as processing aid for highly filled halogen containing polymer compositions.

An objective of the present invention is also to have a polymer composition that can be used to optimize the melt behaviour especially the speed of fusion of highly filled halogen containing polymer compositions.

An additional objective of the present invention is the reduction of the price of a polymer composition which acts as processing aid for the highly filled halogen containing polymer compositions by addition of low cost components without influencing the fusion efficiency or decrease too much the fusion efficiency.

Still another objective of the present invention is a method for manufacturing a polymer composition which acts as processing aid for highly filled halogen containing polymer compositions.

Still an additional objective is having a process for preparing polymer composition that can be used to help the transformation and to increase the melt behaviours of highly filled halogen containing polymer compositions.

### [BACKGROUND OF THE INVENTION] Prior art

The document US 2009/0111915 discloses acrylic copolymers for use in highly filled compositions. In particular the document disclosed filled PVC materials as a composition for flooring comprising 70 to 95wt filler, 1 to 15wt%PVC and 0.5 to 4wt% of acrylic copolymer or a composition for siding or pipe comprising 15 to 35wt filler, 50 to 95wt%PVC and 0.25 to 6wt% of acrylic copolymer.

The document WO 2010/099160 discloses composite polymer modifiers. The document discloses a composite polymer modifier consisting of 99wt% to 1wt% of inorganic filler and from 1wt% to 99wt% of a polymeric processing aid and 0wt% to 80% of an impact modifier.

The document US 3,373,229 discloses vinyl polymer compositions. The compositions comprises polyvinyl chloride and high molecular weight polymers of methyl methacrylate or copolymers of methyl meth acrylate with a small amount of an alkyl acrylate as processing aid. The composition might comprise a filler.

The document US 4,329,276 discloses molding components. The molding component is based on polyvinyl chloride comprising a component composition. The component composition and comprises between 40-85wt% of an acrylic polymer preferably having a Tg between 70°C and 90°C, and comprising preferably methyl methacrylate and butyl methacrylate in a proportion 50/50 to 85/15.

The document US2012/189837 discloses an acrylic process aid for vinyl foam extrusion. The acrylic process aid is an acrylic copolymer preferably having a Tg less than 60°C. In the examples a copolymer of methyl methacrylate (70%) with butyl acrylate (30%) is disclosed. The acrylic copolymer used does not comprise a filler.

Further in US 4 584 349, US 4 564 653 and EP 0 143 321 other (meth)acrylate polymers with PVC are also described.

None of the prior art documents discloses a highly filled polymer composition comprising a halogen containing thermoplastic polymer and a (meth)acrylic copolymer with a filler where a part of the filler is added to the composition with the (meth) acrylic copolymer and a part of the filler is added to the composition with the halogen containing thermoplastic polymer.

### [Brief description of the invention]

Surprisingly it has been found that a composition according to claims 1 to 10 gives a composition with an acceptable fusion time.

Surprisingly it has also been found that a process according to claims 11-18 for preparing a composition as in claims 1 to 10 gives a composition with a acceptable fusion time.

Surprisingly it has also been found that a composition P1 according to claims 19 or 20 can be used to fuse in an acceptable time a composition comprising a halogen containing polymer and a filler.

### [Detailed description of the invention]

According to a first aspect, the present invention relates to a composition comprising
a) a (meth)acrylic copolymer (A1) or a mixture of two (meth)acrylic copolymers (Ala) and (Alb) comprising at least 50wt% of polymeric units coming from methyl methacrylate
b) a filler (F) or a mixture of two fillers (FI) and (F2), is a mineral filler chosen from calcium carbonate, calcinated clay, silica (fumed or precipitated), clay, Montmorillonite (nano-clay), zeolite or perlite,
c) a halogen containing thermoplastic polymer characterized that the glass transition temperature Tg of the (meth)acrylic copolymer (Al) or the mixture of two (meth)acrylic copolymers (Ala) and (Alb) is more important than 95°C and that the quantity of the filler (F) or the mixture of two fillers (FI) and (F2) is more than 40 phr and less than 350 phr relative to the halogen containing thermoplastic polymer and that the molecular weight Mw of the (meth)acrylic copolymer (A1) or the two (meth)acrylic copolymers (A1a) and (A1b) comprising at least 50wt% of polymeric units coming from methyl methacrylate is at least 300 000g/mol and comprising between 0.01 phr and 20 phr of the (meth)acrylic copolymer (A1) or the mixture of two (meth)acrylic copolymers (A1a) and (A1b) relative to the halogen containing thermoplastic polymer.

In a second and third aspect the present invention relates to processes according to claims 11 to 18 for preparing the composition of claims 1 to 10.

In a fourth and fifth aspect the present invention relates to the use of a composition P1 according to claims 19 and 20 to decrease the fusion time of composition comprising a halogen containing polymer and a filler.

By the term "copolymer" as used is denoted that the polymer consists of at least two different monomers.

By the term " (meth) acrylic" as used is denoted all kind of acrylic and methacrylic monomers.

By the term " (meth) acrylic polymer" as used is denoted that the (meth)acrylic) polymer comprises essentially polymers comprising (meth) acrylic monomers that make up 50wt% or more of the (meth)acrylic polymer.

By "multistage polymer" as used is denoted a polymer formed in sequential fashion by a multi-stage polymerization process. Preferred is a multi-stage emulsion polymerization process in which the first polymer is a first-stage polymer and the second polymer is a second-stage polymer, i.e., the second polymer is formed by emulsion polymerization in the presence of the first emulsion polymer.

By the term "dispersion" as used is denoted a colloidal system with a continuous liquid phase and a discontinuous solid phase that is distributed throughout the continuous phase.

By the term "emulsion" as used is denoted a liquid/liquid mixture of a liquid discontinuous phase in a liquid continuous phase.

By the term "PVC" as used is understood polyvinyl chloride in form of homopolymer or copolymer comprising at least 50wt% of vinyl chloride.

By the term "filler" as used is understood a solid extender added to a polymer in order to enhance properties and/or reduce costs.

By the abbreviation "phr" is meant parts per hundred parts of resin. For example 15phr of filler in a PVC formulation means that 15kg of filler are added to 100kg of PVC.

**With regard to the composition** of the present invention, it comprises more than 40phr of filler (F) or a mixture of two fillers (F1) and (F2) relative to the halogen containing thermoplastic polymer.

The composition of the present invention comprises less than 350phr of filler (F) or a mixture of two fillers (F1) and (F2) relative to the halogen containing thermoplastic polymer.

The composition of the present invention comprises between 40phr and 350phr, still more preferably between 40phr and 300phr, advantageously between 50phr and 300phr and more advantageously between 50phr and 250phr and most advantageously between 50phr and 200phr of filler (F) or a mixture of two fillers (F1) and (F2) relative to the halogen containing thermoplastic polymer.

**The polymer composition** or composition according to the invention, it comprises between 0.01phr and 20phr, preferably between 0.05 and 17phr, more preferably between 0.1phr and 15phr, advantageously between 0.15phr and 12phr and more advantageously between 0.15phr and 10phr of the (meth)acrylic copolymer (A1) or the mixture of two (meth)acrylic copolymers (A1a) and (A1b).

In a first most advantageously embodiment the composition according to the invention it comprises between 0.15phr and 9phr of the (meth)acrylic copolymer (A1) or the mixture of two (meth)acrylic copolymers (A1a) and (A1b).

In a second most advantageously embodiment the composition according to the invention it comprises between 0.15phr and 4phr of the (meth)acrylic copolymer (A1) or the mixture of two (meth)acrylic copolymers (A1a) and (A1b).

According to the invention a part of the filler (F) or a part of the mixture of two fillers (F1) and (F2) is added to the composition with the meth)acrylic copolymer (A1) or the mixture of two (meth) acrylic copolymers (A1a) and (A1b). The other part of the filler (F) or the other part of the mixture of two fillers (F1) and (F2) is added to the composition either apart or already with halogen containing thermoplastic polymer. By "already with halogen containing thermoplastic polymer" is meant that the said other part of the filler (F) or a part of the mixture of two fillers (F1) and (F2)is added the halogen containing thermoplastic polymer before the meth)acrylic copolymer (A1) or the mixture of two (meth)acrylic copolymers (A1a) and (A1b) comprising a part of the filler (F) or a part of the mixture of two fillers (F1) and (F2) is added.

According to a variation of the invention a part of the filler (F) or a mixture of two fillers (F1) and (F2) is added to the composition with the (meth)acrylic copolymer (A1) or the mixture of two (meth)acrylic copolymers (A1a) and (A1b) and another part of the filler (F) or a mixture of two fillers (F1) and (F2) is added to the composition with halogen containing thermoplastic polymer.

Preferably the part of the filler (F) or a mixture of two fillers (F1) and (F2) which is added to the composition apart or which is already with the halogen containing thermoplastic polymer, exceeds in quantity the part of the filler (F) or a mixture of two fillers (F1) and (F2) that is added to the composition with the (meth)acrylic copolymer (A1) or the mixture of two (meth)acrylic copolymers (A1a) and (A1b).

**With regard to the (meth) acrylic copolymer (A1)** or the two (meth)acrylic copolymers (A1a) and (A1b), it is a (meth) acrylic copolymer comprising at least 50wt% of polymeric units coming from methyl methacrylate.

More preferably the polymer (A1) comprises a comonomer or comonomers which are copolymerizable with methyl methacrylate, as long as polymer (A1) is having a glass transition temperature more important than 95°C.

More preferably the two (meth)acrylic copolymers (A1a) and (A1b) comprises a comonomer or comonomers which are copolymerizable with methyl methacrylate, as long as the mixture of two (meth) acrylic copolymers (A1a) and (A1b) is having an average glass transition temperature more important than 95°C.

The comonomer or comonomers in polymer (A1), (A1a) and (A1b) are preferably chosen from (meth)acrylic and/or vinyl monomers.

The (meth)acrylic comonomer in (meth)acrylic copolymer (A1) comprises monomers chosen from C1 to C12 alkyl (meth)acrylates. The vinyl comonomer comprises monomers chosen from styrene and substituted styrene. Still more preferably (meth)acrylic comonomer in polymer (A1) comprises monomers of C1 to C4 alkyl methacrylate and/or C1 to C8 alkyl acrylate monomers.

Most preferably the acrylic or methacrylic comonomers of the (meth)acrylic copolymer (A1) are chosen from methyl acrylate, propyl acrylate, isopropyl acrylate, butyl acrylate, tert-butyl acrylate, methyl methacrylate, ethyl methacrylate, butyl methacrylate, isobornyl acrylate and mixtures thereof, as long as (meth)acrylic copolymer (A1) is having a glass transition temperature more important than 95°C .

**Preferably the (meth)acrylic copolymer (A1)** comprises at least 80wt%, more preferably at least 83wt%, and advantageously at least 86wt% of polymeric units coming from methyl methacrylate.

In a specific embodiment the **(meth)acrylic** copolymer (A1) is a copolymer of methyl methacrylate with ethyl acrylate and/or butyl acrylate.

More preferably the glass transition temperature Tg of the (meth)acrylic polymer (A1) comprising at least 50wt% of polymeric units coming from methyl methacrylate is between 95°C and 130°C, even more preferably between 100°C and 125°C and advantageously between 105°C and 120°C.

The glass transition temperature Tg can be estimated for example by dynamic methods as thermo mechanical analysis (DMA).

The mass average molecular weight Mw of the (meth)acrylic copolymer (A1) or the two (meth)acrylic copolymers (Ala) and (Alb) comprising at least 50wt% of polymeric units coming from methyl methacrylate is at least 300 000g/mol, preferably at least 500 000g/mol, more preferably at least 750 000g/mol, advantageously at least 1 000 000 g/mol and most advantageously at least 1 500 000g/mol.

Preferably the mass average molecular weight Mw of the (meth)acrylic copolymer (A1) or the two (meth)acrylic copolymers (A1a) and (A1b) comprising at least 50wt% of polymeric units coming from methyl methacrylate is less than 20 000 000g/mol, preferably less than 15 000 000g/mol, more preferably less than 12 000 000g/mol, advantageously less than 10 000 000 g/mol and most advantageously less than 9 000 000g/mol.

More preferably the mass average molecular weight Mw of the (meth)acrylic copolymer (A1) or the two (meth)acrylic copolymers (A1a) and (A1b) comprising at least 50wt% of polymeric units coming from methyl methacrylate is between 300 000g/mol and 20 000 OOOg/mol, still more preferably between 500 000g/mol and 15 000 000g/mol, even more preferably between 1 000 000 g/mol and 12 000 000g/mol and advantageously between 1 500 000g/mol and 10 000 000 g/mol.

The (meth)acrylic copolymer (A1) or the two (meth)acrylic copolymers (A1a) and (A1b) comprising at least 50wt% of polymeric units coming from methyl methacrylate is preferably prepared by an emulsion polymerisation, yielding to an aqueous dispersion of spherical polymer particles of the (meth)acrylic copolymer (A1) or the two (meth)acrylic copolymers (A1a) and (A1b).

A possible variation of the method for preparing an aqueous dispersion of spherical polymer particles comprising the (meth)acrylic copolymer (A1) or the two (meth)acrylic copolymers (A1a) and (A1b) is by using a multistage process.

During one stage of the multistage process the (meth)acrylic copolymer (A1) is prepared.

The mixture of two (meth)acrylic copolymers (A1a) and (A1b) can also be prepared by a multistage process. During one stage of the multistage process the (meth)acrylic copolymer (A1a) is prepared and during another stage the (meth)acrylic copolymer (A1b).

**With regard to the spherical polymer particle,** it has a weight average particle size between 20nm and 500nm. Preferably the weight average particle size of the polymer is between 50nm and 400nm, more preferably between 75nm and 350nm and advantageously between 80nm and 300nm.

**With regard to the filler (F),** (F1) **and/or (F2),** it is an inorganic filler or mineral filler.

**With regard to the mineral filler,** the mineral filler is chosen from calcium carbonate, calcinated clay, silica (fumed or precipitated, clay, Montmorillonite (nano-clay), zeolite, perlite.

More preferably a part of the filler (F) or the mixture of two fillers (F1) and (F2) is a mineral filler chosen from calcium carbonate, calcinated clay, silica (fumed or precipitated), clay, Montmorillonite (nano-clay), zeolite or perlite.

Still more preferably the mineral filler is chosen from calcium carbonate, calcinated clay, silica (fumed or precipitated, clay, Montmorillonite (nano-clay), zeolite or perlite.

In an even more preferred embodiment the mineral filler is calcium carbonate (CaCO3).

Advantageously the calcium carbonate is chosen from precipitated calcium carbonate (PCC), grinded natural calcium carbonate (GCC) or nanosized particles of precipitated calcium carbonate (NPCC).

The mineral filler could also be in form of a slurry.

Preferably the filler (F) or (F2) that is mixed with at least one (meth)acrylic copolymer (A1) or a mixture of two (meth)acrylic copolymers (A1a) and (A1b) is in form of a slurry.

**As regards the slurry of the mineral filler,** it is a water dispersion of a mineral filler with solid content preferably between 5wt% and 90wt% and advantageously between 50wt% and 80wt%. This water dispersion can contain any specific surfactant, dispersing agent, additive or filler surface treatment that can advantageously improve the quality of the slurry (stability, viscosity or compatibility with the host polymer matrix).

**With regard to the halogen containing polymer,** mention may be made of:
- homopolymers and copolymers of vinyl chloride (PVC) and of vinylidene chloride (PVDC), vinyl resins comprising vinyl chloride units in their structure, such as copolymers of vinyl chloride, and vinyl esters of aliphatic acids, especially vinyl acetate, copolymers of vinyl chloride with esters of acrylic and methacrylic acid and with acrylonitrile, copolymers of vinyl chloride with diene compounds and unsaturated dicarboxylic acids or their anhydrides, such as copolymers of vinyl chloride with diethyl maleate, diethyl fumarate or maleic anhydride, post-chlorinated polymers and copolymers of vinyl chloride, copolymers of vinyl chloride and vinylidene chloride with unsaturated aldehydes, ketones and others, such as acrolein, crotonaldehyde, vinyl methyl ketone, vinyl methyl ether, vinyl isobutyl ether and the like; polymers of vinylidene chloride and its copolymers with vinyl chloride and other polymerizable compounds;
- polymers of vinyl chloroacetate and dichlorodivinyl ether; chlorinated polymers of vinyl carboxylate, such as vinyl acetate, vinyl propionate, vinyl butyrate, chlorinated polymeric esters of acrylic acid and of α-substituted acrylic acid, such as methacrylic acid, of nitriles, amides, alkyl esters such as acrylonitrile, (meth)acrylamide, methyl (meth)acrylate, butyl acrylate, ethyl acrylate, 2-ethylhexyl acrylate;
- polymers of vinyl aromatic derivatives, such as styrene, dichlorostyrene; chlorinated rubbers;
- chlorinated polymers of olefins, such as ethylene, propene, 1-butene, (2.2.1)bicyclo heptene-2, (2.2.1)bicyclo hepta-diene-2,5;
- polymers and post-chlorinated polymers of chlorobutadiene and copolymers thereof with vinyl chloride, chlorinated natural and synthetic rubbers, and also mixtures of these polymers with one another or with other polymerizable compounds.
- grafted halogen containing copolymers, where the halogen containing polymer part is grafted on an (meth)acrylic homo or copolymer, in form of a particles, which could be crosslinked or not.

Preferably the halogen containing polymer is a thermoplastic polymer and not an elastomeric polymer. The glass transition temperature (measured by differential scanning calorimetry) of the thermoplastic polymer is at least 40°C, preferably 50°C.

Preferably the halogen in the halogen containing polymer is chosen from fluorine or chlorine and advantageously the halogen is chlorine.

The chlorine containing polymer is chosen from among polymers or mixtures of polymers chosen from among homopolymer vinyl chlorides such as polyvinyl chloride, polyvinylidene chloride, chlorinated polyvinyl chloride, post-chlorinated polyvinyl chloride and copolymers formed by the polymerisation of a vinyl chloride monomer with up to 40% of a comonomer such as vinyl acetate, vinyl butyrate, vinylidene chloride, propylene, methyl methacrylate and the like, as well as chlorine-containing polymers containing other polymers such as chlorinated polyethylene, terpolymers of acrylonitrile, butadiene, styrene, terpolymers of methyl methacrylate, butadiene, styrene; polyacrylate resins, poly methyl methacrylate resins and terpolymer of alkyl acrylate, methyl methacrylate, butadiene, preferably the chlorine-containing polymer is polyvinyl chloride or post-chlorinated polyvinyl chloride.

Preferably the chlorine containing polymer is chosen from homo- and copolymers of vinyl chloride (VC); comprising at least 50wt% of VC units, preferably at least 70 wt% of VC units, more preferably at least 80 wt% of VC units, advantageously at least 85 wt% of VC units; or mixtures thereof.

**With regard to the manufacturing method** according to claim 11 **for** a polymer composition according to the present invention, it comprises the step of
blending a composition P1 with a halogen containing polymer and a filler (F) or (F2)
characterized that the composition P1 comprises an (meth)acrylic copolymer (A1) or a mixture of two (meth)acrylic copolymers (A1a) and (A1b) and a filler (F) or (F1) and
wherein the glass transition temperature Tg of the (meth)acrylic copolymer is more important than 95°C and that the quantity of the filler (F1) and (F2) together is more than 40phr in view of the halogen containing thermoplastic polymer.

The filler (F1) and (F2) can be the same or different. If the filler (F1) and (F2) are the same they can be seen together simply as filler (F) and their quantity is added. The important point is that the composition P1 to be blended contains already a filler.

Preferably the blending of the compositions P1 with halogen containing polymer and a filler is made by dry blending. Preferably the dry blend is also heated.

The (meth)acrylic copolymer (A1), the mixture of two (meth)acrylic copolymers (A1a) and (A1b), the halogen containing polymer and the mineral filler are the same as defined before.

**With regard to a variation of the manufacturing method** according to claim 12 **for** a polymer composition according to the present invention, it comprises the step of
blending two compositions P1 and P2 characterized that
the composition P1 comprises an (meth)acrylic copolymer (A1) or a mixture of two (meth) acrylic copolymers (Ala) and (Alb) and a filler (F1) and
the composition P2 comprises a halogen containing polymer and a filler F2
wherein the glass transition temperature Tg of the (meth)acrylic copolymer (A1) or the mixture of two (meth)acrylic copolymers (Ala) and (Alb) is more important than 95°C and that the quantity of the filler (F1) and (F2) together is more than 40phr in view of the halogen containing thermoplastic polymer.

The filler (F1) and (F2) can be the same or different. If the filler (F1) and (F2) are the same they can be seen together simply as filler (F) and their quantity is added in order to obtain (calculate) the entire amount in the composition according to the invention. The important point is that each of the two compositions P1 and P2 which are to be blended, contain already a filler.

Preferably the blending of the two compositions P1 and P2 is made by dry blending. Preferably the dry blend is also heated.

The (meth)acrylic copolymer (A1), the mixture of two (meth)acrylic copolymers (Ala) and (A1b), the halogen containing polymer and the mineral filler are the same as defined before.

**With regard to the manufacturing method for** the composition P1, it comprises the step of
a) mixing of at least one (meth)acrylic copolymer (A1) or a mixture of two (meth)acrylic copolymers (Ala) and (Alb) with at least one filler (F1)
wherein the (meth)acrylic copolymer (A1) or the mixture of two (meth)acrylic copolymers (Ala) and (Alb) and the mineral filler in step a) are in form of a dispersion in aqueous phase.

Preferably the (meth)acrylic copolymer (A1) or the mixture of two (meth)acrylic copolymers (Ala) and (Alb) in form of a dispersion in aqueous phase is obtained by emulsion polymerization.

Preferably the filler in form of a dispersion in aqueous phase is the slurry of the mineral filler as described above.

The (meth)acrylic copolymer (A1) and the mineral filler are the same as defined before.

**With regard to a variation of the manufacturing method for** a the composition P1, it comprises the steps of
a) mixing of at least one (meth)acrylic copolymer (A1) or a mixture of two (meth)acrylic copolymers (A1a) and (A1b) with at least one filler (F) or (F1)
b)recovering of the mixture obtained in a)
c)drying the recovered mixture of step b)
wherein the (meth)acrylic copolymer (A1) or a mixture of two (meth)acrylic copolymers (A1a) and (A1b) and the mineral filler in step a) are in form of a dispersion in aqueous phase.

By recovering is meant partial or complete separation between the aqueous and solid phase, said solid phase comprises (meth)acrylic copolymer (A1) or the mixture of two (meth)acrylic copolymers (A1a) and (A1b) and the filler. In the case that a complete separation between the aqueous and solid phase of the mixture takes already place during the recovering step, no further drying is necessary. Or in other words the recovering and the drying of the mixture take place at the same time.

Preferably the recovery of the mixture of (meth)acrylic copolymer (A1) or the mixture of two (meth)acrylic copolymers (A1a) and (A1b) and filler, is made by spray drying, freeze drying or coagulation.

The (meth)acrylic copolymer (A1), the mixture of two (meth)acrylic copolymers (A1a) and (A1b) and the filler are the same as defined before.

Advantageously the recovery of the mixture of (meth)acrylic copolymer (A1) or the mixture of two (meth)acrylic copolymers (A1a) and (A1b) with the filler, is made by spray drying.

The mixture of the (meth)acrylic copolymer (A1) or the mixture of two (meth)acrylic copolymers (A1a) and (A1b) with the filler after drying comprises less than 3wt% humidity and preferably less than 1.5wt% humidity and more preferably less than 1.2wt% humidity.

In the case of spray drying it is possible to mix the dispersion of mixture of (meth)acrylic copolymer (A1) or the mixture of two (meth)acrylic copolymers (A1a) and (A1b) with the filler and the slurry or dispersion filler before adding the mixture to the spray drying apparatus. It is also possible to mix the dispersion of the mixture of (meth)acrylic copolymer (A1) or the mixture of two (meth)acrylic copolymers (A1a) and (A1b) with the filler and the slurry or dispersion mineral filler inside the spray drying apparatus during the recovering step.

Spray drying is the preferred method for the recovering and/or drying for the manufacturing method for composition P1.

The composition P1 comprises between 1wt% and 50wt%, preferably between 2wt% and 50wt% and more preferably between 5wt% and 50wt% of one filler (F) or (F1) relatively to the complete composition made of meth)acrylic copolymer (A1) or the mixture of two (meth)acrylic copolymers (A1a) and (A1b) and the filler.

If the composition comprises other additional (meth)acrylic copolymers, they are taken into account for the calculation of the weight ratio of the filler, if they fall under the definition of meth)acrylic copolymer (A1) or the mixture of two (meth)acrylic copolymers (A1a) and (A1b) in the composition according to the invnetion.

The composition P2 comprises between 40phr and 350phr, preferably between 40phr and 300phr, and more preferably between 50phr and 300phr of one filler (F) or (F2).

The present invention relates also to the use of the polymer composition P1 comprising (meth)acrylic copolymer (A1) or a mixture of two (meth)acrylic copolymers (A1a) and (A1b) and a filler (F) or (F1) to fuse in a reasonable time a composition comprising a halogen containing polymer and a filler (F) or (F2).

The present invention relates also to the use of the polymer composition P1 comprising (meth)acrylic copolymer (A1) or a mixture of two (meth)acrylic copolymers (A1a) and (A1b) and a filler F1 to fuse in a reasonable time a composition P2 comprising halogen containing polymer and a filler F2.

Preferably the polymer composition P1 comprising (meth)acrylic copolymer (A1) or the mixture of two (meth)acrylic copolymers (A1a) and (A1b) and a filler F1 is in form of the polymer powder.

The polymer powder of composition P1 comprises the agglomerated spherical particles of meth)acrylic copolymer (A1) or the mixture of two (meth)acrylic copolymers (A1a) and (A1b) and particles of the mineral filler.

The polymer powder has a volume median particle size D50 between 1µm and **5**00µm. Preferably the volume median particle size of the polymer powder is between 10µm and 450µm, more preferably between 15µm and 400µm and advantageously between 20µm and **30**0µm.

The D10 of the particle size distribution in volume is at least 7µm and preferably 10µm.

The D90 of the particle size distribution in volume is at most 800µm and preferably at most 500µm.

The powder according to the invention is homogenous in view of the composition concerning its components: the (meth)acrylic copolymer (A1) or the mixture of two (meth)acrylic copolymers (A1a) and (A1b) and the mineral filler.

Homogeneous in the present invention signifies no important variation throughout the composition. If one or several small samples (1g) or less comprising several powder grain particles) is/are taken from a larger quantity (1kg) of the composition there is no important variation of the composition concerning the weight ratio of the respective components in the small sample in comparison to other small samples and the global composition. By no important variation is meant that the variation is less than 30% relative to the global composition, inside a 1wt% sample of P1 taken from whole P1. As an example, if the global composition P1 comprises 40wt% of the inorganic compound (F) and 60wt% of the (meth)acrylic copolymer (A1), a small first sample taken from the global composition that would comprise 35%wt of the inorganic compound (F) and 65w% of the (meth)acrylic copolymer (A1) or small second sample taken from the global composition that would comprise 42%wt of the inorganic compound (F) and 58wt% of the (meth)acrylic copolymer (A1), would signify a homogenous composition as the variation of ratio of the respective components throughout the small samples is within the 30% variation in view of the global composition of the sample.

The composition P1 is a homogenous powder having no important variation throughout the composition P1 comprising one (meth)acrylic copolymer (A1) or a mixture of two (meth)acrylic copolymers (A1a) and (A1b) with at least one filler (F) or (F1), with a variation of the composition P1 which is less than 30% relative to the global composition P1 of a 1wt% sample of P1 taken from P1.

Preferably the variation of the components within the composition is less than 25%, more preferably less than 20%.

In an ideal case each powder particle or grain comprises the two components the (meth)acrylic copolymer (A1) or the mixture of two (meth)acrylic copolymers (A1a) and (A1b) and filler and is composed of aggregated particles of the two components.

The present invention relates also to an article comprising the polymer composition as described above. This article can be a profile, a pipe, a siding, a flooring film or sheet or a foamed article.

### [Methods of evaluation]

### Glass transition Temperature

The glass transitions (Tg) of the polymers are measured with equipment able to realize a thermo mechanical analysis. A RDAII "RHEOMETRICS DYNAMIC ANALYSER" proposed by the Rheometrics Company has been used. The thermo mechanical analysis measures precisely the visco-elastics changes of a sample in function of the temperature, the strain or the deformation applied. The used frequency is 1Hz. The apparatus records continuously, the sample deformation, keeping the stain fixed, during a controlled program of temperature variation.

The results are obtained by drawing, in function of the temperature, the elastic modulus (G'), the loss modulus and the tan delta. The Tg is higher temperature value read in the tan delta curve, when the derived of tan delta is equal to zero.

### Molecular Weight

The mass average molecular weight (Mw) of the polymers is measured with by size exclusion chromatography (SEC).

### Fusion efficiency

The fusion efficiency of the PVC polymer composition is estimated by measuring the fusion time with a torque rheometer based on ASTM D2538-02 (reapproved 2010). A shorter fusion time signifies a better fusion efficiency.

### [Examples]

### Abbreviations

- MMA -: methyl methacrylate
- BA -: butyl acrylate
- EA -: ethyl acrylate
- PVC -: polyvinylchloride

The filler in examples for the (meth)acrylic copolymer (A1) or a mixture of two (meth)acrylic copolymers (A1a) and (A1b) as processing aid (PA) is calcium carbonate (CaCO₃). CaCO₃ slurry or dispersion is prepared according to the technique described in J.P. Pat. No. 59057913. Namely the slurry is obtained by mixing 270 parts of water, 0.72 parts of sodium polyacrylate and 729.3 parts of CaCO₃ of diam. 0.2 - 0.6 .mu. and 0.6% moisture and stirring for 20 min at shear rate 5. times. 102/s. The obtained solid content is 73wt%.
Comparative example 1: Charged into a reactor, with stirring, were 8600 g of water, 5.23 g of Na₂CO₃ and 38.20 g of sodium lauryl sulfate, and the mixture was stirred until complete dissolution. Three vacuum-nitrogen purges were carried out in succession and the reactor left under a slight vacuum. The reactor was then heated. At the same time, a mixture comprising 4166.4 g of methyl methacrylate and 1041.6 g of n-butyl acrylate was nitrogen-degassed for 30 minutes. Next, the mixture was rapidly introduced into the reactor using a pump. When the temperature of the reaction mixture reached 55 degrees centigrade, 7.81 g of potassium persulfate dissolved in 98.08 g of water were introduced. The line was rinsed with 50 g of water. The reaction mixture was left to rise in temperature to the exothermal peak. The polymerization was then left to completion for 60 minutes after the exothermal peak. The reactor was cooled down to 30 degrees centigrade and the latex removed. The latex is dried by spray drying.
Comparative example 2: Charged into a reactor, with stirring, were 8600 g of water, 5.23 g of Na₂CO₃ and 38.20 g of sodium lauryl sulfate, and the mixture was stirred until complete dissolution. Three vacuum-nitrogen purges were carried out in succession and the reactor left under a slight vacuum. The reactor was then heated. At the same time, a mixture comprising 3645.6 g of methyl methacrylate and 1562.4 g of n-butyl acrylate was nitrogen-degassed for 30 minutes. Next, the mixture was rapidly introduced into the reactor using a pump. When the temperature of the reaction mixture reached 55 degrees centigrade, 7.81 g of potassium persulfate dissolved in 98.08 g of water were introduced. The line was rinsed with 50 g of water. The reaction mixture was left to rise in temperature to the exothermal peak. The polymerization was then left to completion for 60 minutes after the exothermal peak. The reactor was cooled down to 30 degrees centigrade and the latex removed. The latex is dried by spray drying.
Comparative example 3: Charged into a reactor, with stirring, were 8600 g of water, 5.23 g of Na₂CO₃ and 38.20 g of sodium lauryl sulfate, and the mixture was stirred until complete dissolution. Three vacuum-nitrogen purges were carried out in succession and the reactor left under a slight vacuum. The reactor was then heated. At the same time, a mixture comprising 4687.2 g of methyl methacrylate and 520.8 g of n-butyl acrylate was nitrogen-degassed for 30 minutes. Next, the mixture was rapidly introduced into the reactor using a pump. When the temperature of the reaction mixture reached 55 degrees centigrade, 7.81 g of potassium persulfate dissolved in 98.08 g of water were introduced. The line was rinsed with 50 g of water. The reaction mixture was left to rise in temperature to the exothermal peak. The polymerization was then left to completion for 60 minutes after the exothermal peak. The reactor was cooled down to 30 degrees centigrade and the latex removed. The obtained solid content is 37.55wt%. The latex is dried by spray drying.

Example 1: In a first time the copolymer latex is made according to the synthesis described in comparative example 3. The final product is obtained by mixing the copolymer latex and the slurry with the following ratio, 14 kg (14000 parts) of latex and 0.379 kg (379 parts) of slurry, and spray dried in the conditions classically used for the latex alone.
Example 2: The copolymer latex is made according to the synthesis described in comparative example 3. The final product is obtained by mixing the copolymer latex and the slurry with the following ratio, 14 kg (14000 parts) of latex and 1.8 kg (1800 parts) of slurry, and spray dried in the conditions classically used for the latex alone.

The characteristics of PA samples of comparative examples and examples are summarized in table 2.

The prepared spray dried samples of comparative examples and examples are formulated at 1.5phr as processing aid (PA) in a PVC composition. The compositions are dry blended in a Papenmeyer equipment while increasing the temperature. PVC compositions are prepared with 60phr CaCO₃ as filler in the PVC respectively.

**Table 1 - PVC compositions with two ratios of filler**

| components | Composition with quantities in phr |
|---|---|
| PVC | 100 |
| 1pack CaZn | 4 |
| CaCo3 | 60 |
| PA from respective comparative examples and examples | 1.5 |

As polyvinylchloride PVC S110P from Kemone is used. As one pack stabilizer Ca/ZN Naftosafe GWX 380 D-3 from Chemson is used.

The samples are tested for fusion efficiency with a torque rheometer.

The fusion efficiency is evaluated relatively to compositions comprising comparative examples 1 and 2. Comparative example 1 and 2 are processing aid compositions without a filler. Its fusion efficiency is judged with ++. All other examples or comparative examples that have fusion time within an interval of +/-10s are also judged ++. If the fusion time is faster in an interval -25s to -10s the example is judged +++. If the fusion time is faster in an interval -50s to -25s the example is judged ++++. If the fusion time is 50s faster than comparative example 1 in an interval up to -50s the example is judged +++++. If the fusion time is slower than comparative example 1 and 2 with at least +10s it is judged +.

Results of fusion efficiency are summarized in table 2.

**Table 2 Characteristics of PA made in the respective examples and comparative examples and their evaluation of fusion efficiency in a composition**

| | PA composition | Filler content in PA / [wt%] | Tg of PA /[°C] | Mw / [*10⁶ g/mol] | Fusion efficience |
|---|---|---|---|---|---|
| Comparative example 1 | MMA/BA 80/20 | 0 | 96 | 4.5 | ++ |
| Comparitive example 2 | MMA/BA 70/30 | 0 | 80 | 4.5 | ++ |
| Comparitive example 3 | MMA/BA 90/10 | 0 | 107 | 4.5 | +++++ |
| Example 1 | MMA/BA 90/10 | 5 | 107 | 4.5 | +++++ |
| Example 2 | MMA/BA 90/10 | 20 | 107 | 4.5 | ++++ |

The examples 1 to 2 show that the fusion efficiency of a composition of a (meth)acrylic copolymer (A1) comprising a filler in a highly filled halogen containing thermoplastic polymer (PVC), does perform equal or still acceptable than the comparative examples with the same composition of a (meth)acrylic copolymer (A1) and better than the comparative examples with the other composition of a (meth)acrylic copolymer (A1) having a low Tg.

## Claims

1. A composition comprising:
a) a (meth)acrylic copolymer (A1) or a mixture of two (meth)acrylic copolymers (A1a) and (A1b) comprising at least 50wt% of polymeric units coming from methyl methacrylate
b) a filler (F) or a mixture of two fillers (F1) and (F2), is a mineral filler chosen from calcium carbonate, calcinated clay, silica (fumed or precipitated), clay, Montmorillonite (nano-clay), zeolite or perlite,
c) a halogen containing thermoplastic polymer
characterized that the glass transition temperature Tg (as measured in the experimental part) of the (meth)acrylic copolymer (A1) or the mixture of two (meth)acrylic copolymers (A1a) and (A1b) is more important than 95°C and that the quantity of the filler (F) or the mixture of two fillers (F1) and (F2) is more than 40phr and less than 350phr relative to the halogen containing thermoplastic polymer and that the molecular weight Mw (as measured in the experimental part) of the (meth)acrylic copolymer (A1) or the two (meth)acrylic copolymers (A1a) and (A1b) comprising at least 50wt% of polymeric units coming from methyl methacrylate is at least 300 OOOg/mol and comprising between 0.01phr and 20phr of the (meth)acrylic copolymer (A1) or the mixture of two (meth)acrylic copolymers (A1a) and (A1b) relative to the halogen containing thermoplastic polymer.

2. Composition according to claim 1, wherein a part of the filler (F) or a part of the mixture of two fillers (F1) and (F2) is added to the composition with the (meth)acrylic copolymer (A1) or the mixture of two (meth)acrylic copolymers (A1a) and (A1b) and the other part of the filler (F) or the other part of the mixture of two fillers (F1) and (F2) is added to the composition either apart or already with halogen containing thermoplastic polymer.

3. Composition according to any of claims 1 to 2 comprising between between 50phr and 300phr of the filler (F) or mixture of two fillers (F1) and (F2) relative to the halogen containing thermoplastic polymer.

4. Composition according to any of claims 1 to 3 comprising between 0.05phr and 17phr of the (meth)acrylic copolymer (A1) or the mixture of two (meth)acrylic copolymers (A1a) and (A1b) relative to the halogen containing thermoplastic polymer.

5. Composition according to any of claims 1 to 4 wherein at least a part of the filler (F) or the mixture of two fillers (F1) and (F2) is chosen from precipitated calcium carbonate (PCC), grinded natural calcium carbonate (GCC) or nanosized particles of precipitated calcium carbonate (NPCC).

6. Composition according to any of claims 1 to 4 wherein the filler (F) or the mixture of two fillers (F1) and (F2) is chosen from calcium carbonate.

7. Composition according to any of claims 1 to 4 wherein the (meth)acrylic copolymer (A1) or the mixture of two (meth)acrylic copolymers (A1a) and (A1b) is chosen from a copolymer comprising at least 80wt% of methyl methacrylate.

8. Composition according to claim 7 wherein the molecular weight Mw of the (meth) acrylic copolymer (A1) or the two (meth)acrylic copolymers (A1a) and (A1b) comprising at least 50wt% of polymeric units coming from methyl methacrylate is between 1 000 000 g/mol and 12 000 000g/mol.

9. Composition according to any of claims 1 to 8 wherein the glass transition temperature Tg of the (meth)acrylic copolymer (A1) or the mixture of two (meth)acrylic copolymers (A1a) and (A1b) is between 95°C and 130°C and even more preferably between 100°C and 125°C.

10. Composition according to any of claims 1 to 3 wherein the halogen containing thermoplastic polymer is chosen from a homo or copolymer of vinylchloride comprising at least 50wt% of vinylchloride units.

11. A process for preparing a composition according to claims 1 to 10, said process comprises the step of
blending a compositions P1 with a halogen containing polymer and a filler (F) or (F2) characterized that the composition P1 comprises an (meth)acrylic copolymer (A1) or a mixture of two (meth)acrylic copolymers (A1a) and (A1b) and a filler (F) or (F1) and
wherein the glass transition temperature Tg of the (meth)acrylic copolymer is more important than 95°C and that the quantity of the filler (F) or the mixture of two fillers (F1) and (F2) is more than 40phr relative to the halogen containing thermoplastic polymer.

12. A process for preparing a composition according to claims 1 to 10, said process comprises the step of
blending two compositions P1 and P2 characterized that
the composition P1 comprises an (meth)acrylic copolymer (A1) or mixture of two (meth)acrylic copolymers (A1a) and (A1b) and a filler F or F1 and
the composition P2 a halogen containing polymer and a filler F or F2
characterized that the glass transition temperature Tg of the (meth)acrylic copolymer (A1) or mixture of two (meth)acrylic copolymers (A1a) and (A1b) is more important than 95°C and that the quantity of the filler (F) or the mixture of two fillers (F1) and (F2) is more than 40phr relative to the halogen containing thermoplastic polymer.

13. The process according to claim 11 or 12, characterized that the composition P1 is obtained by a manufacturing method comprising the step of
a) mixing of at least one (meth)acrylic copolymer *(A1) or a mixture of two (meth)acrylic copolymers (A1a) and (A1b) with at least one filler (F) or (F1)
wherein the (meth)acrylic copolymer (A1) or the mixture of two (meth)acrylic copolymers (A1a) and (A1b) and the filler F) or (F1) in step a) are in form of a dispersion in aqueous phase.

14. The process according to claim 11 or 12, characterized that the composition P1 is obtained by a manufacturing method comprising the step of
a) mixing of at least one (meth)acrylic copolymer (A1) or a mixture of two (meth)acrylic copolymers (Ala) and (Alb) with at least one filler (F) or (F1)
b)recovering of the mixture obtained in a)
c)drying the recovered mixture of step b)
wherein the (meth)acrylic copolymer (A1) or a mixture of two (meth)acrylic copolymers (A1a) and (A1b) and the mineral filler in step a) are in form of a dispersion in aqueous phase.

15. The process according to any of claims 11 to 14, characterized that the composition P1 comprises between 1wt% and 50wt%, preferably between 2wt% and 50wt% and more preferably between 5wt% and 50wt% of the filler (F) or (F1) relatively to the complete composition P1 made of meth)acrylic copolymer (A1) or the mixture of two (meth)acrylic copolymers (A1a) and (A1b) and the filler.

16. The process according to any of claims 11 to 15, characterized that the composition P1 is in form of a powder.

17. The process according to any of claims 11 to 16, characterized that the composition P1 is a homogenous powder having no important variation, wherein by no important variation is meant that the variation is less than 30% relative to the global composition, inside a 1 wt% sample of P1 taken from whole P1, throughout the composition P1 comprising one (meth) acrylic copolymer (A1) or a mixture of two (meth)acrylic copolymers (A1a) and (A1b) with at least one filler (F) or (F1), with variation of the composition P1 which is less than 30% of a 1wt% sample of P1 relative to the global composition P1.

18. The process according to any of claims 16 to 17, characterized that each powder particle or grain of the composition P1 comprises the two components the meth)acrylic copolymer (A1) or the mixture of two (meth)acrylic copolymers (A1a) and (A1b) and filler.

19. Use of a composition P1 comprising an (meth)acrylic copolymer (A1) or a mixture of two (meth) acrylic copolymers (A1a) and (Alb) comprising at least 50wt% of polymeric units coming from methyl methacrylate and a filler F or F1 to decrease the fusion time of a composition comprising a halogen containing polymer and a filler (F) or (F2), characterized that the glass transition temperature Tg of the (meth)acrylic copolymer (A1) or the mixture of two (meth)acrylic copolymers (A1a) and (A1b) is more important than 95°C and that the quantity of the filler (F) or the mixture of two fillers (F1) and (F2) is more than 40phr and less than 350phr relative to the halogen containing thermoplastic polymer, and that the filler is a mineral filler chosen from calcium carbonate, calcinated clay, silica (fumed or precipitated), clay, Montmorillonite (nano-clay), zeolite or perlite, and that the molecular weight Mw of the (meth)acrylic copolymer (A1) or the two (meth)acrylic copolymers (A1a) and (A1b) comprising at least 50wt% of polymeric units coming from methyl methacrylate is at least 300 000g/mol and comprising between 0.01phr and 20phr of the (meth)acrylic copolymer (A1) or the mixture of two (meth)acrylic copolymers (A1a) and (A1b) relative to the halogen containing thermoplastic polymer .

20. Use of a composition P1 comprising an (meth)acrylic copolymer (A1) or a mixture of two (meth) acrylic copolymers (A1a) and (A1b) comprising at least 50wt% of polymeric units coming from methyl methacrylate and a filler F1 to decrease the fusion time of composition P2 comprising halogen containing polymer and a filler F2, characterized that the glass transition temperature Tg of the (meth)acrylic copolymer (A1) or the mixture of two (meth)acrylic copolymers (A1a) and (A1b) is more important than 95°C and that the quantity of the filler (F) or the mixture of two fillers (F1) and (F2) is more than 40phr and less than 350phr relative to the halogen containing thermoplastic polymer and and that the filler is a mineral filler chosen from calcium carbonate, calcinated clay, silica (fumed or precipitated), clay, Montmorillonite (nano-clay), zeolite or perlite, and that the molecular weight Mw of the (meth)acrylic copolymer (A1) or the two (meth)acrylic copolymers (A1a) and (A1b) comprising at least 50wt% of polymeric units coming from methyl methacrylate is at least 300 000g/mol and comprising between 0.01phr and 20phr of the (meth)acrylic copolymer (A1) or the mixture of two (meth)acrylic copolymers (A1a) and (A1b) relative to the halogen containing thermoplastic polymer.

21. Article comprising a composition according to any of claims 1 to 10 or a composition prepared by a process according to any of claims 11 to 18.

## Patentansprüche

1. Zusammensetzung, umfassend:
a) ein (Meth)acrylcopolymer (A1) oder ein Gemisch aus zwei (Meth)acrylcopolymeren (A1a) und (A1b), umfassend mindestens 50 Gew.-% Polymereinheiten, die von Methylmethacrylat stammen,
b) einen Füllstoff (F) oder ein Gemisch aus zwei Füllstoffen (F1) und (F2), wobei es sich um einen Mineralfüllstoff handelt, der ausgewählt ist aus Calciumcarbonat, kalziniertem Ton, (pyrogener oder gefällter) Kieselsäure, Ton, Montmorillonit (Nano-Ton), Zeolith oder Perlit,
c) ein halogenhaltiges thermoplastisches Polymer,
**dadurch gekennzeichnet, dass** die Glasübergangstemperatur Tg (wie sie im Versuchsabschnitt gemessen wurde) des (Meth)acrylcopolymers (A1) oder des Gemischs aus zwei (Meth)acrylcopolymeren (A1a) und (A1b) höher ist als 95°C und dass die Menge des Füllstoffs (F) oder des Gemischs aus zwei Füllstoffen (F1) und (F2) mehr als 40 phr und weniger als 350 phr bezogen auf das halogenhaltige thermoplastische Polymer beträgt, und dass das Molekulargewicht Mw (wie es im Versuchsabschnitt gemessen wurde) des (Meth)acrylcopolymers (A1) oder der beiden (Meth)acrylcopolymere (A1a) und (A1b), umfassend mindestens 50 Gew.-% Polymereinheiten, die von Methylmethacrylat stammen, mindestens 300 000 g/mol beträgt und zwischen 0,01 phr und 20 phr des (Meth)acrylcopolymers (A1) oder des Gemischs aus zwei (Meth)acrylcopolymeren (A1a) und (A1b) bezogen auf das halogenhaltige thermoplastische Polymer umfasst.

2. Zusammensetzung nach Anspruch 1, wobei ein Teil des Füllstoffs (F) oder ein Teil des Gemischs aus zwei Füllstoffen (F1) und (F2) der Zusammensetzung mit dem (Meth)acrylcopolymer (A1) oder dem Gemisch aus zwei (Meth)acrylcopolymeren (A1a) und (A1b) zugesetzt wird, und der andere Teil des Füllstoffs (F) oder der andere Teil des Gemischs aus zwei Füllstoffen (F1) und (F2) der Zusammensetzung entweder getrennt oder bereits mit dem halogenhaltigen thermoplastischen Polymer zugesetzt wird.

3. Zusammensetzung nach einem der Ansprüche 1 bis 2, umfassend zwischen 50 phr und 300 phr des Füllstoffs (F) oder des Gemischs aus zwei Füllstoffen (F1) und (F2) bezogen auf das halogenhaltige thermoplastische Polymer.

4. Zusammensetzung nach einem der Ansprüche 1 bis 3, umfassend zwischen 0,05 phr und 17 phr des (Meth)acrylcopolymers (A1) oder des Gemischs aus zwei (Meth)acrylcopolymeren (A1a) und (A1b) bezogen auf das halogenhaltige thermoplastische Polymer.

5. Zusammensetzung nach einem der Ansprüche 1 bis 4, wobei mindestens ein Teil des Füllstoffs (F) oder des Gemischs aus zwei Füllstoffen (F1) und (F2) aus gefälltem Calciumcarbonat (PCC), gemahlenem natürlichem Calciumcarbonat (GCC) oder Nanogrößen-Teilchen von gefälltem Calciumcarbonat (NPCC) ausgewählt ist.

6. Zusammensetzung nach einem der Ansprüche 1 bis 4, wobei der Füllstoff (F) oder das Gemisch aus zwei Füllstoffen (F1) und (F2) aus Calciumcarbonat ausgewählt ist.

7. Zusammensetzung nach einem der Ansprüche 1 bis 4, wobei das (Meth)acrylcopolymer (A1) oder das Gemisch aus zwei (Meth)acrylcopolymeren (A1a) und (A1b) ausgewählt ist aus einem Copolymer, das mindestens 80 Gew.-% Methylmethacrylat umfasst.

8. Zusammensetzung nach Anspruch 7, wobei das Molekulargewicht Mw des (Meth)acrylcopolymers (A1) oder der beiden (Meth)acrylcopolymere (A1a) und (A1b), umfassend mindestens 50 Gew.-% Polymereinheiten, die von Methylmethacrylat stammen, zwischen 1 000 000 g/mol und 12 000 000 g/mol liegt.

9. Zusammensetzung nach einem der Ansprüche 1 bis 8, wobei die Glasübergangstemperatur Tg des (Meth)acrylcopolymers (A1) oder des Gemischs aus zwei (Meth)acrylcopolymeren (A1a) und (A1b) zwischen 95°C und 130°C und noch stärker bevorzugt zwischen 100°C und 125°C liegt.

10. Zusammensetzung nach einem der Ansprüche 1 bis 3, wobei das halogenhaltige thermoplastische Polymer ausgewählt ist aus einem Homo- oder Copolymer von Vinylchlorid, umfassend mindestens 50 Gew.-% Vinylchlorideinheiten.

11. Verfahren zur Herstellung einer Zusammensetzung nach den Ansprüchen 1 bis 10, wobei das Verfahren den Schritt umfasst
Mischen einer Zusammensetzung P1 mit einem halogenhaltigen Polymer und einem Füllstoff (F) oder (F2), **dadurch gekennzeichnet, dass** die Zusammensetzung P1 ein (Meth)acrylcopolymer (A1) oder ein Gemisch aus zwei (Meth)acrylcopolymeren (A1a) und (A1b) und einen Füllstoff (F) oder (F1) umfasst, und
wobei die Glasübergangstemperatur Tg des (Meth)acrylcopolymers höher ist als 95°C und dass die Menge des Füllstoffs (F) oder des Gemischs aus zwei Füllstoffen (F1) und (F2) mehr als 40 phr bezogen auf das halogenhaltige thermoplastische Polymer beträgt.

12. Verfahren zur Herstellung einer Zusammensetzung nach den Ansprüchen 1 bis 10, wobei das Verfahren den Schritt umfasst
Mischen von zwei Zusammensetzungen P1 und P2, **dadurch gekennzeichnet, dass**
die Zusammensetzung P1 ein (Meth)acrylcopolymer (A1) oder ein Gemisch aus zwei (Meth)acrylcopolymeren (Ala) und (Alb) und einen Füllstoff F oder F1 umfasst, und
die Zusammensetzung P2 ein halogenhaltiges Polymer und einen Füllstoff F oder F2 umfasst,
**dadurch gekennzeichnet, dass** die Glasübergangstemperatur Tg des (Meth)acrylcopolymers (A1) oder des Gemischs aus zwei (Meth)acrylcopolymeren (Ala) und (Alb) höher ist als 95°C und dass die Menge des Füllstoffs (F) oder des Gemischs aus zwei Füllstoffen (F1) und (F2) mehr als 40 phr bezogen auf das halogenhaltige thermoplastische Polymer beträgt.

13. Verfahren nach Anspruch 11 oder 12, **dadurch gekennzeichnet, dass** die Zusammensetzung P1 durch ein Herstellungsverfahren erhalten wird, umfassend den Schritt
a) Mischen von mindestens einem (Meth)acrylcopolymer (A1) oder einem Gemisch aus zwei (Meth)acrylcopolymeren (A1a) und (A1b) mit mindestens einem Füllstoff (F) oder (F1),
wobei das (Meth)acrylcopolymer (A1) oder das Gemisch aus zwei (Meth)acrylcopolymeren (A1a) und (A1b) und der Füllstoff (F) oder (F1) in Schritt a) in Form einer Dispersion in wässriger Phase vorliegen.

14. Verfahren nach Anspruch 11 oder 12, **dadurch gekennzeichnet, dass** die Zusammensetzung P1 durch ein Herstellungsverfahren erhalten wird, umfassend den Schritt
a) Mischen von mindestens einem (Meth)acrylcopolymer (A1) oder einem Gemisch aus zwei (Meth)acrylcopolymeren (A1a) und (A1b) mit mindestens einem Füllstoff (F) oder (F1)
b) Gewinnen des in a) erhaltenen Gemischs
c) Trocknen des in Schritt b) gewonnenen Gemischs,
wobei das (Meth)acrylcopolymer (A1) oder ein Gemisch aus zwei (Meth)acrylcopolymeren (A1a) und (A1b) und der Mineralfüllstoff in Schritt a) in Form einer Dispersion in wässriger Phase vorliegen.

15. Verfahren nach einem der Ansprüche 11 bis 14, **dadurch gekennzeichnet, dass** die Zusammensetzung P1 zwischen 1 Gew.-% und 50 Gew.-%, vorzugsweise zwischen 2 Gew.-% und 50 Gew.-% und stärker bevorzugt zwischen 5 Gew.-% und 50 Gew.-% des Füllstoffs (F) oder (F1) bezogen auf die Gesamtzusammensetzung P1, hergestellt aus (Meth)acrylcopolymerisat (A1) oder dem Gemisch aus zwei (Meth)acrylcopolymeren (A1a) und (A1b) und dem Füllstoff, umfasst.

16. Verfahren nach einem der Ansprüche 11 bis 15, **dadurch gekennzeichnet, dass** die Zusammensetzung P1 in Form eines Pulvers vorliegt.

17. Verfahren nach einem der Ansprüche 11 bis 16, **dadurch gekennzeichnet, dass** die Zusammensetzung P1 ein homogenes Pulver ist, das keine wesentliche Variation, wobei keine wesentliche Variation bedeutet, dass die Variation kleiner als 30% bezogen auf die Gesamtzusammensetzung ist, im Inneren einer aus Gesamt-P1 entnommenen 1 Gew.-% Probe von P1 in der Zusammensetzung P1 aufweist, umfassend
ein (Meth)acrylcopolymer (A1) oder ein Gemisch aus zwei (Meth)acrylcopolymeren (A1a) und (A1b) mit mindestens einem Füllstoff (F) oder (F1), mit einer Variation der Zusammensetzung P1, die weniger als 30% einer 1 Gew.-% Probe von P1 bezogen auf die Gesamtzusammensetzung P1 beträgt.

18. Verfahren nach einem der Ansprüche 16 bis 17, **dadurch gekennzeichnet, dass** jedes Pulverteilchen oder -Korn der Zusammensetzung P1 die beiden Komponenten (Meth)acrylcopolymer (A1) oder das Gemisch aus zwei (Meth)acrylcopolymeren (A1a) und (A1b) und Füllstoff umfasst.

19. Verwendung einer Zusammensetzung P1, umfassend ein (Meth)acrylcopolymer (A1) oder ein Gemisch aus zwei (Meth)acrylcopolymeren (A1a) und (A1b), umfassend mindestens 50 Gew.-% Polymereinheiten, die von Methylmethacrylat stammen, und einen Füllstoff F oder F1, zur Verkürzung der Schmelzzeit einer Zusammensetzung, die ein halogenhaltiges Polymer und einen Füllstoff (F) oder (F2) umfasst, **dadurch gekennzeichnet, dass** die Glasübergangstemperatur Tg des (Meth)acrylcopolymers (A1) oder des Gemischs aus zwei (Meth)acrylcopolymeren (A1a) und (A1b) höher ist als 95°C und dass die Menge des Füllstoffs (F) oder des Gemischs aus zwei Füllstoffen (F1) und (F2) mehr als 40 phr und weniger als 350 phr bezogen auf das halogenhaltige thermoplastische Polymer beträgt, und dass der Füllstoff ein Mineralfüllstoff ist, der ausgewählt ist aus Calciumcarbonat, kalziniertem Ton, (pyrogener oder gefällter) Kieselsäure, Ton, Montmorillonit (Nano-Ton), Zeolith oder Perlit, und dass das Molekulargewicht Mw des (Meth)acrylcopolymers (A1) oder der beiden (Meth)acrylcopolymere (A1a) und (A1b), umfassend mindestens 50 Gew.-% Polymereinheiten, die von Methylmethacrylat stammen, mindestens 300 000 g/mol beträgt und zwischen 0,01 phr und 20 phr des (Meth)acrylcopolymers (A1) oder des Gemischs aus zwei (Meth)acrylcopolymeren (A1a) und (A1b) bezogen auf das halogenhaltige thermoplastische Polymer umfasst.

20. Verwendung einer Zusammensetzung P1, umfassend ein (Meth)acrylcopolymer (A1) oder ein Gemisch aus zwei (Meth)acrylcopolymeren (A1a) und (A1b), umfassend mindestens 50 Gew.-% Polymereinheiten, die von Methylmethacrylat stammen, und einen Füllstoff F1, zur Verkürzung der Schmelzzeit einer Zusammensetzung P2, die ein halogenhaltiges Polymer und einen Füllstoff F2 umfasst, **dadurch gekennzeichnet, dass** die Glasübergangstemperatur Tg des (Meth)acrylcopolymers (A1) oder des Gemischs aus zwei (Meth) acrylcopolymeren (A1a) und (A1b) höher ist als 95°C und dass die Menge des Füllstoffs (F) oder des Gemischs aus zwei Füllstoffen (F1) und (F2) mehr als 40 phr und weniger als 350 phr bezogen auf das halogenhaltige thermoplastische Polymer beträgt, und dass der Füllstoff ein Mineralfüllstoff ist, der ausgewählt ist aus Calciumcarbonat, kalziniertem Ton, (pyrogener oder gefällter) Kieselsäure, Ton, Montmorillonit (Nano-Ton), Zeolith oder Perlit, und dass das Molekulargewicht Mw des (Meth)acrylcopolymers (A1) oder der beiden (Meth)acrylcopolymere (A1a) und (A1b), umfassend mindestens 50 Gew.-% Polymereinheiten, die von Methylmethacrylat stammen, mindestens 300 000 g/mol beträgt und zwischen 0,01 phr und 20 phr des (Meth)acrylcopolymers (A1) oder des Gemischs aus zwei (Meth)acrylcopolymeren (A1a) und (A1b) bezogen auf das halogenhaltige thermoplastische Polymer umfasst.

21. Gegenstand, umfassend eine Zusammensetzung nach einem der Ansprüche 1 bis 10 oder Zusammensetzung, hergestellt nach einem Verfahren nach einem der Ansprüche 11 bis 18.

## Revendications

1. Composition comprenant :
a) un copolymère (méth) acrylique (A1) ou un mélange de deux copolymères (méth)acryliques (A1a) et (A1b) comprenant au moins 50 % en poids de motifs polymériques provenant du méthacrylate de méthyle
b) une charge (F) ou un mélange de deux charges (F1) et (F2), qui est une charge minérale choisie parmi le carbonate de calcium, l'argile calcinée, la silice (sublimée ou précipitée), l'argile, la Montmorillonite (nano-argile), la zéolithe ou la perlite,
c) un polymère thermoplastique contenant halogène
**caractérisée en ce que** la température de transition vitreuse Tv (telle que mesurée dans la partie expérimentale) du copolymère (méth) acrylique (A1) ou du mélange de deux copolymères (méth)acryliques (A1a) et (A1b) est supérieure à 95 °C et que la quantité de la charge (F) ou du mélange de deux charges (F1) et (F2) est supérieure à 40 phr et inférieure à 350 phr par rapport au polymère thermoplastique contenant halogène et que le poids moléculaire Mw (tel que mesuré dans la partie expérimentale) du copolymère (méth)acrylique (A1) ou des deux copolymères (méth)acryliques (A1a) et (A1b) comprenant au moins 50 % en poids de motifs polymériques provenant du méthacrylate de méthyle est d'au moins 300.000 g/mole et comprenant entre 0,01 phr et 20 phr du copolymère (méth)acrylique (A1) ou du mélange de deux copolymères (méth)acryliques (Ala) et (A1b) par rapport au polymère thermoplastique contenant halogène.

2. Composition selon la revendication 1, une partie de la charge (F) ou une partie du mélange de deux charges (F1) et (F2) étant ajoutée à la composition comportant le copolymère (méth) acrylique (A1) ou le mélange de deux copolymères (méth)acryliques (A1a) et (A1b) et l'autre partie de la charge (F) ou l'autre partie du mélange de deux charges (F1) et (F2) étant ajoutée à la composition soit séparément soit déjà avec le polymère thermoplastique contenant halogène.

3. Composition selon l'une quelconque des revendications 1 et 2 comprenant entre 50 phr et 300 phr de la charge (F) ou du mélange de deux charges (F1) et (F2) par rapport au polymère thermoplastique contenant halogène.

4. Composition selon l'une quelconque des revendications 1 à 3 comprenant entre 0,05 phr et 17 phr du copolymère (méth) acrylique (A1) ou du mélange de deux copolymères (méth)acryliques (A1a) et (A1b) par rapport au polymère thermoplastique contenant halogène.

5. Composition selon l'une quelconque des revendications 1 à 4, au moins une partie de la charge (F) ou du mélange de deux charges (F1) et (F2) étant choisie parmi le carbonate de calcium précipité (PCC), le carbonate de calcium naturel broyé (GCC) ou les nanoparticules de carbonate de calcium précipité (NPCC).

6. Composition selon l'une quelconque des revendications 1 à 4, la charge (F) ou le mélange de deux charges (F1) et (F2) étant choisi(e) parmi le carbonate de calcium.

7. Composition selon l'une quelconque des revendications 1 à 4, le copolymère (méth) acrylique (A1) ou le mélange de deux copolymères (méth)acryliques (A1a) et (A1b) étant choisi parmi un copolymère comprenant au moins 80 % en poids de méthacrylate de méthyle.

8. Composition selon la revendication 7, le poids moléculaire Mw du copolymère (méth)acrylique (A1) ou des deux copolymères (méth)acryliques (A1a) et (A1b) comprenant au moins 50 % en poids de motifs polymériques provenant du méthacrylate de méthyle se situant entre 1.000.000 g/mole et 12.000.000 g/mole.

9. Composition selon l'une quelconque des revendications 1 à 8, la température de transition vitreuse Tv du copolymère (méth)acrylique (A1) ou du mélange de deux copolymères (méth)acryliques (A1a) et (A1b) étant comprise entre 95 °C et 130 °C et encore plus préférablement entre 100 °C et 125 °C.

10. Composition selon l'une quelconque des revendications 1 à 3, le polymère thermoplastique contenant halogène étant choisi parmi un homopolymère et un copolymère de chlorure de vinyle comprenant au moins 50 % en poids de motifs chlorure de vinyle.

11. Procédé pour la préparation d'une composition selon les revendications 1 à 10, ledit procédé comprenant l'étape de
mélange d'une composition P1 comprenant un polymère contenant halogène et d'une charge (F) ou (F2) **caractérisé en ce que** la composition P1 comprend un copolymère (méth)acrylique (A1) ou un mélange de deux copolymères (méth)acryliques (A1a) et (A1b) et une charge (F) ou (F1) et
la température de transition vitreuse Tv du copolymère (méth)acrylique étant supérieure à 95 °C et que la quantité de la charge (F) ou du mélange de deux charges (F1) et (F2) est supérieure à 40 phr par rapport au polymère thermoplastique contenant halogène.

12. Procédé pour la préparation d'une composition selon les revendications 1 à 10, ledit procédé comprenant l'étape de
mélange de deux compositions P1 et P2 **caractérisé en ce que**
la composition P1 comprend un copolymère (méth) acrylique (A1) ou un mélange de deux copolymères (méth)acryliques (A1a) et (A1b) et une charge F ou F1 et
la composition P2 comprend un polymère contenant halogène et une charge F ou F2
**caractérisé en ce que** la température de transition vitreuse Tv du copolymère (méth)acrylique (A1) ou du mélange de deux copolymères (méth)acryliques (A1a) et (A1b) est supérieure à 95 °C et que la quantité de la charge (F) ou du mélange de deux charges (F1) et (F2) est supérieure à 40 phr par rapport au polymère thermoplastique contenant halogène.

13. Procédé selon la revendication 11 ou 12, **caractérisé en ce que** la composition P1 est obtenue par un procédé de fabrication comprenant l'étape de
a) mélange d'au moins un copolymère (méth) acrylique (A1) ou d'un mélange de deux copolymères (méth)acryliques (A1a) et (A1b) avec au moins une charge (F) ou (F1)
le copolymère (méth)acrylique (A1) ou le mélange de deux copolymères (méth)acryliques (A1a) et (A1b) et la charge F) ou (F1) dans l'étape a) se trouvant sous forme d'une dispersion en phase aqueuse.

14. Procédé selon la revendication 11 ou 12, **caractérisé en ce que** la composition P1 est obtenue par un procédé de fabrication comprenant l'étape de
a) mélange d'au moins un copolymère (méth) acrylique (A1) ou d'un mélange de deux copolymères (méth)acryliques (A1a) et (A1b) avec au moins une charge (F) ou (F1)
b) récupération du mélange obtenu en a)
c) séchage du mélange récupéré de l'étape b)
le copolymère (méth)acrylique (A1) ou un mélange de deux copolymères (méth)acryliques (A1a) et (Alb) et la charge minérale dans l'étape a) se trouvant sous forme d'une dispersion en phase aqueuse.

15. Procédé selon l'une quelconque des revendications 11 à 14, **caractérisé en ce que** la composition P1 comprend entre 1 % en poids et 50 % en poids, préférablement entre 2 % en poids et 50 % en poids et plus préférablement entre 5 % en poids et 50 % en poids de la charge (F) ou (F1) par rapport à la composition complète P1 composée de copolymère (méth) acrylique (A1) ou de mélange de deux copolymères (méth)acryliques (A1a) et (A1b) et de la charge.

16. Procédé selon l'une quelconque des revendications 11 à 15, **caractérisé en ce que** la composition P1 se trouve sous forme d'une poudre.

17. Procédé selon l'une quelconque des revendications 11 à 16, **caractérisé en ce que** la composition P1 est une poudre homogène ne possédant pas de variation importante, les termes variation importante signifiant que la variation est inférieure à 30 % par rapport à la composition globale, dans un échantillon de 1 % en poids de P1 prélevé de P1 entière,
dans toute la composition P1 comprenant
un copolymère (méth)acrylique (A1) ou un mélange de deux copolymères (méth)acryliques (A1a) et (Alb) comportant au moins une charge (F) ou (F1), comportant une variation de la composition P1 qui est inférieure à 30 % d'un échantillon de 1 % en poids de P1 par rapport à la composition globale P1.

18. Procédé selon l'une quelconque des revendications 16 et 17, **caractérisé en ce que** chaque particule ou grain de poudre de la composition P1 comprend les deux composants le copolymère (méth)acrylique (A1) ou le mélange de deux copolymères (méth)acryliques (A1a) et (A1b) et la charge.

19. Utilisation d'une composition P1 comprenant un copolymère (méth)acrylique (A1) ou un mélange de deux copolymères (méth)acryliques (A1a) et (A1b) comprenant au moins 50 % en poids de motifs polymériques provenant du méthacrylate de méthyle et une charge F ou F1 pour diminuer le temps de fusion d'une composition comprenant un polymère contenant halogène et une charge (F) ou (F2), **caractérisée en ce que** la température de transition vitreuse Tv du copolymère (méth) acrylique (A1) ou du mélange de deux copolymères (méth)acryliques (A1a) et (A1b) est supérieure à 95 °C et que la quantité de la charge (F) ou du mélange de deux charges (F1) et (F2) est supérieure à 40 phr et inférieure à 350 phr par rapport au polymère thermoplastique contenant halogène, et que la charge est une charge minérale choisie parmi le carbonate de calcium, l'argile calcinée, la silice (sublimée ou précipitée), l'argile, la Montmorillonite (nano-argile), la zéolithe ou la perlite, et que le poids moléculaire Mw du copolymère (méth)acrylique (A1) ou des deux copolymères (méth)acryliques (A1a) et (A1b) comprenant au moins 50 % en poids de motifs polymériques provenant du méthacrylate de méthyle est d'au moins 300.000 g/mole et comprenant entre 0,01 phr et 20 phr du copolymère (méth) acrylique (A1) ou du mélange de deux copolymères (méth)acryliques (A1a) et (A1b) par rapport au polymère thermoplastique contenant halogène.

20. Utilisation d'une composition P1 comprenant un copolymère (méth)acrylique (A1) ou un mélange de deux copolymères (méth)acryliques (A1a) et (A1b) comprenant au moins 50 % en poids de motifs polymériques provenant du méthacrylate de méthyle et une charge F1 pour diminuer le temps de fusion d'une composition P2 comprenant un polymère contenant halogène et une charge F2, **caractérisée en ce que** la température de transition vitreuse Tv du copolymère (méth)acrylique (A1) ou du mélange de deux copolymères (méth)acryliques (A1a) et (A1b) est supérieure à 95 °C et que la quantité de la charge (F) ou du mélange de deux charges (F1) et (F2) est supérieure à 40 phr et inférieure à 350 phr par rapport au polymère thermoplastique contenant halogène, et que la charge est une charge minérale choisie parmi le carbonate de calcium, l'argile calcinée, la silice (sublimée ou précipitée), l'argile, la Montmorillonite (nano-argile), la zéolithe ou la perlite, et que le poids moléculaire Mw du copolymère (méth)acrylique (A1) ou des deux copolymères (méth)acryliques (A1a) et (A1b) comprenant au moins 50 % en poids de motifs polymériques provenant du méthacrylate de méthyle est d'au moins 300.000 g/mole et comprenant entre 0,01 phr et 20 phr du copolymère (méth) acrylique (A1) ou du mélange de deux copolymères (méth)acryliques (A1a) et (A1b) par rapport au polymère thermoplastique contenant halogène.

21. Article comprenant une composition selon l'une quelconque des revendications 1 à 10 ou une composition préparée par un procédé selon l'une quelconque des revendications 11 à 18.
